# EUROPÄISCHE PATENTSCHRIFT

(11) **EP 4 452 812 B1**
(45) Veröffentlichungstag und Bekanntmachung des Hinweises auf die Patenterteilung: **18.11.2026**
(21) Anmeldenummer: 22839785.7
(22) Anmeldetag: 19.12.2022
(51) Int. Cl.: B66B 5/00, B66B 1/34, B66B 5/14

(54) **VORRICHTUNG ZUM MESSEN EINER KRAFT AN EINER AUFZUGANLAGE, VERFAHREN ZUM MESSEN EINER KRAFT AN EINER BEWEGLICHEN KOMPONENTE EINER AUFZUGANLAGE, SOWIE EINE AUFZUGANLAGE ZUM AUSFÜHREN DES VERFAHRENS**
DEVICE FOR MEASURING A FORCE ON A LIFT INSTALLATION, METHOD FOR MEASURING A FORCE ON A MOVABLE COMPONENT OF A LIFT INSTALLATION, AND A LIFT INSTALLATION FOR CARRYING OUT THE METHOD
DISPOSITIF DE MESURE D'UNE FORCE SUR UNE INSTALLATION D'ASCENSEUR, PROCÉDÉ DE MESURE D'UNE FORCE SUR UN COMPOSANT MOBILE D'UNE INSTALLATION D'ASCENSEUR, AINSI QU'INSTALLATION D'ASCENSEUR PERMETTANT DE METTRE EN UVRE LE PROCÉDÉ

(30) Priorität: 20.12.2021 EP 21215981
(43) Veröffentlichungstag der Anmeldung: 30.10.2024
(73) Patentinhaber: INVENTIO AG, 6052 Hergiswil (CH)
(72) Erfinder: LO JACONO, Romeo, 6929 Gravesano (CH); TROTTMANN, Gilles, 6344 Meierskappel (CH); WANG, Eric, 6003 Luzern (CH)
(74) Vertreter: Inventio AG
(86) Internationale Anmeldenummer: PCT/EP2022/086538
(87) Internationale Veröffentlichungsnummer: WO 2023/117832

(56) Entgegenhaltungen:
- WO-A1-2021/084012
- DE-A1- 4 311 011

## Beschreibung

Die vorliegende Erfindung betrifft eine Vorrichtung für eine Aufzuganlage, ein Verfahren zum Messen einer Kraft an wenigstens einem Gegengewicht und/oder einer Kabine (im Folgenden auch als bewegliche Komponente einer Aufzuganlage zusammengefasst), sowie eine Aufzuganlage.

Eine Aufzuganlage weist vertikal bewegliche Komponenten wie beispielsweise eine Kabine und wenigsten ein Gegengewicht auf. Die beweglichen Komponenten sind über zumindest ein Tragmittel miteinander verbunden. Das Tragmittel läuft über zumindest eine Antriebsrolle einer Antriebseinrichtung der Aufzuganlage. Auf einer Seite der Antriebsrolle trägt das Tragmittel eine konstante Gewichtskraft des Gegengewichts. Auf der anderen Seite trägt das Tragmittel die variable Gewichtskraft der Kabine und einer darin zu befördernden Last. Die Antriebseinrichtung bringt ein Drehmoment auf, um einen Unterschied zwischen den Gewichtskräften auszugleichen. Das Drehmoment wird durch Reibung bzw. Traktion zwischen dem Tragmittel und der Antriebsrolle auf das Tragmittel übertragen.

Vor Inbetriebnahme und/oder im Rahmen von Wartungsarbeiten sind Funktionalitäten der Aufzuganlage zu prüfen. Insbesondere kann die Aufzuganlage über einen Lastsensor verfügen, mithilfe dessen eine aktuelle Last der Aufzugkabine ermittelt werden kann, indem z.B. eine zwischen der Aufzugkabine und dem Tragmittel wirkende Last gemessen werden kann. Um die Funktionalität des Lastsensors zu prüfen, kann die Kabine mit einem bekannten Zusatzgewicht belastet werden. Das Zusatzgewicht kann beispielsweise in Form von Bleiklötzen in die Kabine eingebracht werden. Da die zusätzliche Masse der Bleiklötze bekannt ist, ist auch eine zusätzlich auf das Tragmittel wirkende Gewichtskraft bekannt.

Die WO2008071301A1 beschreibt ein Verfahren und eine Vorrichtung zum Prüfen von Aufzuganlagen.

Die WO2010089337A1 beschreibt eine Vorrichtung zum Durchführen einer Belastungsprüfung in einer Aufzuganlage und ein Verfahren zum Durchführen einer solchen Prüfung.

Die WO2013068648A1 beschreibt ein Verfahren und eine Vorrichtung zum Messen einer Balance eines Aufzugs und ein Verfahren zum Balancieren des Aufzugs.

Die WO2021084012A1 offenbart eine Vorrichtung nach dem Oberbegriff des Anspruchs 1.

Die DE4311011A1 beschreibt ein Verfahren und eine Vorrichtung zur Prüfung eines Aufzuges.

Es kann unter anderem ein Bedarf an einer verbesserten Vorrichtungund und einem Verfahren zum Messen einer Kraft an einer beweglichen Komponente einer Aufzuganlage bestehen. Ferner kann ein Bedarf an einer verbesserten Möglichkeit zum Kalibrieren eines Lastsensors einer Aufzuganlage bestehen. Weiter kann ein Bedarf an einer Aufzuganlage bestehen, in welcher ein Verfahren zum Messen einer Kraft durchgeführt werden kann.

Einem solchen Bedarf kann durch ein Vorrichtung, einem Verfahren zum Messen einer Kraft an einer beweglichen Komponente einer Aufzuganlage, sowie einer Aufzuganlage gemäss den Hauptansprüchen entsprochen werden. Vorteilhafte Ausführungsformen sind in den abhängigen Ansprüchen definiert und in der Beschreibung beschrieben.

Bei dem hier vorgestellten Ansatz ist das Zusatzgewicht, welches herkömmlich beispielsweise mittels Bleiklötzen zum Ändern der Zugkraft zwischen der Antriebsrolle und der Kabine eingesetzt wurde, überflüssig. Anstelle des bekannten Zusatzgewichts in der Kabine wird eine der beweglichen Komponenten zeitweise beispielsweise an einem Schienensystem der Aufzuganlage fixiert und eine Zugkraft im Tragmittel verändert. Die Zugkraft kann dabei anders als durch das Zusatzgewicht auch verringert werden. An der fixierten Komponente wird dabei eine aus der veränderten Zugkraft resultierende Kraft gemessen.

Unter Verwendung der gemessenen Kraft kann ein Lastsensor bzw. Kraftsensor an der Kabine oder dem Gegengewicht kalibriert werden. Weiterhin kann eine Masse, welcher einer Überlast entspricht, mit der Vorrichtung imitiert werden, um beispielsweise einen Integritätstest der Aufzuganlage durchzuführen.

Durch das Messen der Kraft an der fixierten Komponente, kann auf eine Bereitstellung und Rückführung des Zusatzgewichts sowie das Beladen und Entladen der Kabine mit dem Zusatzgewicht verzichtet werden. Zum Messen der Kraft ist lediglich zumindest eine hier vorgestellte, leicht transportierbare Vorrichtung mit einer Blockiereinrichtung und einer Messeinrichtung erforderlich.

Gemäss einem ersten Aspekt der Erfindung wird eine Vorrichtung nach Anspruch 1 vorgestellt.

Gemäss einem zweiten Aspekt der Erfindung wird ein Verfahren zum Messen einer Kraft an wenigstens einem Gegengewicht und/oder einer Kabine einer Aufzugsanlage vorgestellt, wobei die Aufzuganlage wenigstens eine Aufzugssteuerung, eine Führungsschiene und wenigstens ein Gegengewicht und eine Kabine aufweist, wobei das wenigstens eine Gegengewicht über wenigstens ein Tragmittel mit der Kabine verbunden ist umfassend die Schritte:
- Verbinden wenigstens einer Vorrichtung gemäss dem ersten Aspekt der Erfindung mit der wenigstens einen Führungsschiene;
- Aufsetzen des wenigstens einen Gegengewichts und/oder der Kabine auf die wenigstens eine Vorrichtung;
- Verändern einer über Tragmittel auf das wenigstens eine Gegengewicht und/oder die Kabine übertragene Zugkraft;
- Erfassen eines Kraftwerts anhand einer über die Vorrichtung in das Schienensystem abgeleiteten Kraft.

Gemäss einem als solchen nicht beanspruchten dritten Aspekt der Erfindung wird eine Aufzuganlage mit wenigstens einem, bevorzugt zwei, Gegengewicht(en), einer Kabine und einer Aufzugssteuerung vorgestellt, wobei die Aufzugssteuerung zur Verbindung mit einer Vorrichtung gemäss einem ersten Aspekt der Erfindung und zur Durchführung eines Verfahrens gemäss einem zweiten Aspekt der Erfindung ausgebildet ist.

Eine Blockiereinrichtung kann eine Bewegung des wenigstens einen Gegengewicht und der Kabine entlang der Führungsschiene zumindest in eine Richtung im Wesentlichen vollständig verhindern. Die Richtung kann insbesondere eine vertikale Richtung sein. Die Blockiereinrichtung kann in dieser Richtung ein unüberwindliches Hindernis für die bewegliche Komponente (wenigstens einen Gegengewicht und der Kabine) darstellen. Die Blockiereinrichtung kann von der beweglichen Komponente ausgeübte Druckkräfte und/oder Zugkräfte in das Schienensystem ableiten.

Die Blockiereinrichtung kann zumindest einen Haken zum Einhängen in eine entsprechende Aussparung des Schienensystems aufweisen. Der Haken kann in die Aussparung eingeführt werden und entlang der Aussparung bewegt werden, bis eine Anlagefläche des Hakens an einem Rand der Aussparung anliegt. Über den Haken kann die Kraft in das Schienensystem abgeleitet werden. Der Haken kann eine werkzeuglose Montage und Demontage der Vorrichtung ermöglichen. Das Schienensystem kann mehrere passende Aussparungen aufweisen. Die Vorrichtung kann so an unterschiedlichen Positionen des Schienensystems eingehängt werden. Die Blockiereinrichtung kann insbesondere mehrere gleichartige Haken aufweisen. Durch mehrere Haken kann eine Redundanz erreicht werden und eine Betriebssicherheit der Vorrichtung erhöht werden. Ebenso kann über mehrere Haken eine grössere Kraft in das Schienensystem abgeleitet werden.

Der zumindest eine Haken kann symmetrisch ausgeführt sein. So kann der Haken in entgegengesetzten Orientierungen in die Aussparung einhängbar sein. Alternativ oder ergänzend kann der symmetrische Haken Zugkräfte des Tragmittels nach oben und die Gewichtskraft der beweglichen Komponente nach unten in das Schienensystem ableiten. Bei einem Wechsel der Kraftrichtung kann der Haken in der Aussparung gleiten, bis die entgegengesetzte Seite des Hakens an der gegenüberliegenden Seite der Aussparung anliegt. So kann sich die Vorrichtung nach oben und unten an dem Schienensystem abstützen.

Die Blockiereinrichtung kann zum Verbinden mit dem Schienensystem eine Kabinenseite und eine Gegengewichtseite aufweisen. Die Messeinrichtung kann an einer Kabine der Aufzuganlage verwendbar sein, wenn die Kabinenseite mit dem Schienensystem verbunden ist. Alternativ kann die Messeinrichtung an einem Gegengewicht der Aufzuganlage verwendbar sein, wenn die Gegengewichtseite mit dem Schienensystem verbunden ist. Eine Kabinenführung des Schienensystems kann sich von einer Gegengewichtführung des Schienensystems unterscheiden. Die Kabinenseite kann an die Kabinenführung angepasst sein. Die Gegengewichtseite kann an die Gegengewichtführung angepasst sein. Die Kabinenseite und die Gegengewichtseite können auf unterschiedlichen Seiten des Schienensystems mit dem Schienensystem verbunden werden.

Die Messeinrichtung kann so ausgebildet sein, dass der Kraftwert in Form eines Signals an eine Steuerung der Aufzugsanlage übermittelbar ist. So kann die Vorrichtung mit der Aufzugssteuerung verbunden werden. Dies ermöglicht eine wenigstens teilweise Automation der Verfahren, bei welchen die Messeinrichtung der Vorrichtung verwendet wird. Diese Eigenschaft kann beispielweise durch eine Kabelverbindung und/oder durch eine wireless-Verbindung ausgeführt sein.

Die Vorrichtung kann so ausgebildet sein, dass diese weiter eine Anzeige zur Darstellung der durch die Messeinrichtung gemessen Kraftwerte aufweist. So kann bei Verwendung der Vorrichtung zur Messung von Zugkräften der sich bei einem statischen Zustand eingestellten und entsprechend angezeigten Kraftwert abgelesen und beispielsweise durch Eingabe an der Aufzugsteuerung verwendet werden.

Alternativ oder zusätzlich ist die Vorrichtung gemäss einer Ausführungsform durch eine Schraubvorrichtung mit dem Gegengewicht und/oder der Kabine verbindbar.

Alternativ oder zusätzlich umfasst die Vorrichtung eine Schraubvorrichtung, mit welcher im montierten Zustand eine über Tragmittel auf das wenigstens ein Gegengewicht und/oder die Kabine übertragene Zugkraft veränderbar ist.

Gemäss einer Ausführungsform weist die Schraubvorrichtung ein Gewinde, bevorzugt eine Gewindestange, auf, über das das Gegengewicht und/oder die Kabine um eine definierte Strecke bewegt werden kann um die Zugkraft zu verändern. Bevorzugt kann das Gegengewicht und/oder die Kabine über die Schraubvorrichtung angehoben werden, um die Zugkraft zu verringern. Bevorzugt kann das Gegengewicht und/oder die Kabine alternativ oder zusätzlich durch die Schraubvorrichtung nach unten gedrückt oder nach unten gezogen werden, um die Zugkraft zu erhöhen.

Eine Aufzuganlage kann eine Personentransportanlage sein. Pro Kabine kann die Aufzuganlage zumindest ein Gegengewicht aufweisen. Insbesondere kann die Aufzuganlage zwei Gegengewichte pro Kabine aufweisen. Zwischen der Kabine und den Gegengewichten ist zumindest ein Tragmittel angeordnet. Das Tragmittel kann beispielsweise ein Seil oder ein Riemen sein. Das Tragmittel kann über zumindest eine Antriebsrolle einer Antriebseinrichtung der Aufzuganlage geführt sein. Die Antriebsrolle kann an einem oberen Ende eines Schienensystems der Aufzuganlage angeordnet sein. Die Gegengewichte können gegengleich zur Kabine bewegt werden.

Das Schienensystem kann zumindest eine Führung pro Kabine und zumindest eine Führung pro Gegengewicht aufweisen. Insbesondere kann das Schienensystem zwei parallel verlaufende, vertikale Führungsschienen aufweisen, zwischen denen die Kabine vertikal beweglich gelagert ist. Jede Führungsschiene kann auf einer Aussenseite eine Führung für eines der Gegengewichte aufweisen.

Die Vorrichtung kann temporär mit dem Schienensystem verbunden werden. Die Vorrichtung kann auch mit einem anderen statischen Element, wie beispielsweise einem Schienenbügel oder einer Schachtwand verbunden werden. Die Vorrichtung kann mechanisch mit dem Schienensystem verbunden werden. Beispielsweise kann die Vorrichtung mit der Führungsschiene verschraubt werden oder an die Führungsschiene angeklemmt werden. Bei zwei Führungsschienen können die Vorrichtungen paarweise verwendet werden. Die Führungsschiene kann zumindest einen vordefinierten Befestigungspunkt für die Vorrichtung aufweisen, an dem die Vorrichtung formschlüssig mit der Führungsschiene verbunden werden kann. Die Vorrichtung kann in unmittelbarer Nähe einer Kabinenbremse der Aufzuganlage mit der Kabine verbunden werden. So kann die durch die Messeinrichtung gemessene Kraft genauer der tatsächlichen Kraft am Lastsensor entsprechen, der in die Kabinenbremse integriert ist. Die Vorrichtung kann oberhalb oder unterhalb der beweglichen Komponente angeordnet werden.

Eine Messeinrichtung kann beispielsweise eine Kraftmessdose oder ein Wiegebalken sein. Die Messeinrichtung kann zwischen einer Schnittstelle der Vorrichtung zum Schienensystem und einer Schnittstelle der Vorrichtung zu der beweglichen Komponente angeordnet sein. Eine einwirkende Kraft kann die Messeinrichtung geringfügig elastisch verformen. Die Verformung kann in einem elektrischen Signal abgebildet werden. Das Signal kann die Kraft repräsentieren. Die Messeinrichtung kann kalibriert sein. Beispielsweise kann die Messeinrichtung vor dem Fixieren der beweglichen Komponente auf null gesetzt werden.

Die Zugkraft kann vergrössert oder verringert werden.

Die Zugkraft kann unter Verwendung einer Schraubvorrichtung der Vorrichtung verändert werden. Die Schraubvorrichtung kann ein Gewinde aufweisen, über das die bewegliche Komponente um eine definierte Strecke bewegt werden kann, um die Zugkraft zu verändern. Die Komponente kann über die Schraubvorrichtung angehoben werden, um die Zugkraft zu verringern. Ebenso kann die Komponente durch die Schraubvorrichtung nach unten gedrückt oder nach unten gezogen werden, um die Zugkraft zu erhöhen.

Alternativ oder ergänzend kann die Zugkraft über ein über die Treibscheibe bereitgestelltes Drehmoment der Antriebseinrichtung verändert werden. Das Drehmoment kann über eine Motorsteuerung der Antriebseinrichtung verändert werden. Das Drehmoment kann auch durch eine Bremse an der Treibscheibe verändert werden. Ein Betrag der Änderung kann dem Motorsteuergerät vorgegeben werden und/oder eine tatsächliche Änderung des Drehmoments gemessen werden und von dem Motorsteuergerät ausgegeben werden.

Die Komponente kann mit der mit dem Schienensystem verbundenen Vorrichtung mechanisch verbunden werden. Die Vorrichtung kann unterhalb der beweglichen Komponente mit dem Schienensystem verbunden werden und von unten mit der beweglichen Komponente verbunden werden. Durch die mechanische Verbindung kann die Zugkraft des Tragmittels vergrössert werden, ohne dass die Komponente von der Vorrichtung abhebt. Die Vorrichtung kann auch oberhalb der beweglichen Komponente mit dem Schienensystem verbunden werden und von oben mechanisch mit der beweglichen Komponente verbunden werden. Dann kann die bewegliche Komponente an der Vorrichtung hängen und das Tragmittel entlastet werden. Die Komponente kann auch von der Vorrichtung nach unten gedrückt werden. Durch die mechanische Fixierung können ferner Arbeiten am Aufzug sicher ausgeführt werden.

Die Zugkraft kann so vergrössert werden, dass sie grösser als eine Nominallast der Aufzuganlage ist. Die Zugkraft kann insbesondere so vergrössert werden, dass sie grösser als 120% der Nominallast der Aufzuganlage ist. Eine Nominallast kann die im Betrieb maximal zulässige Last für die Aufzuganlage repräsentieren. Durch das Vergrössern der Zugkraft kann eine Überlastsituation simuliert werden. Viele sicherheitsrelevante Teile der Aufzuganlage werden durch die vergrösserte Zugkraft stärker belastet, als sie im Betrieb der Aufzuganlage belastet werden. Wenn die Teile die vergrösserte Zugkraft aushalten, kann von einem sicheren Betrieb bis zur Nominallast ausgegangen werden. Der Lastsensor kann den Betrieb mit einer Last grösser als die Nominallast verhindern, indem beispielsweise die Kabinenbremse nicht freigegeben wird, solange die Last grösser als die Nominallast ist.

Die Vorrichtung kann auch ohne Messen der wirkenden Kraft verwendet werden. Dann kann die Vorrichtung als leicht handhabbare Blockiervorrichtung verwendet werden, um eine hohe Arbeitssicherheit zu gewährleisten.

In einem weiter Verfahrensschritt kann ein Lastsensor kalibriert werden. Dazu wird ein Kraftwert unter Verwendung eines Verfahrens wie vorangehend und im Folgenden beschrieben erfasst., wobei die veränderte Zugkraft unter Verwendung des Lastsensors in einem Lastwert abgebildet wird, wobei ein Vergleich zwischen dem Lastwert und dem Kraftwert durchgeführt wird und der Lastsensor unter Verwendung eines Ergebnisses des Vergleichs kalibriert wird.

Unter Verwendung des Lastsensors kann die Zugkraft des Tragmittels bei frei am Tragmittel hängender Komponente in einem Referenzwert abgebildet werden. Der Vergleich kann ferner unter Verwendung des Referenzwerts durchgeführt werden. Durch den Referenzwert kann eine Änderung des Lastwerts beim Ändern der Zugkraft ausgewertet werden. Durch das Auswerten der Änderung kann beispielsweise ein Verstärkungsfaktor für den Lastwert bestimmt werden.

Die Zugkraft kann unter Verwendung der Antriebseinrichtung zumindest ein weiteres Mal verändert werden. Dabei kann zumindest ein weiterer Messwert des Lastsensors und/oder der Vorrichtung erfasst werden. Der Vergleich kann ferner unter Verwendung des zumindest einen weiteren Messwerts durchgeführt werden. Insbesondere können Wertepaare aus Messwerten und zugehörigen Zugkräften erfasst werden. Unter Verwendung von mehreren Messwerten bei unterschiedlichen Zugkräften beziehungsweise Wertepaaren kann eine Kalibrierkurve für den Lastsensor bestimmt werden. Unter Verwendung der Kalibrierkurve kann der Lastwert über einen grossen Wertebereich linearisiert werden.

Ein Lastsensor kann ebenfalls als Kraftmessdose oder Wiegebalken ausgeführt sein. Der Lastsensor kann an einer Schnittstelle zwischen dem Tragmittel und der Kabine angeordnet sein. Der Lastsensor kann in eine Bremseinrichtung der Kabine integriert sein. Die Kabine kann auch mehrere Lastsensoren aufweisen.

Zum Kalibrieren des Lastsensors kann ein von dem Lastsensor gemessener Lastwert mit einem bekannten Wert verglichen werden. Wenn der Lastwert von dem bekannten Wert abweicht, kann ein Korrekturfaktor bestimmt werden und der Lastwert unter Verwendung des Korrekturfaktors korrigiert werden.

Es wird darauf hingewiesen, dass einige der möglichen Merkmale und Vorteile der Erfindung hierin mit Bezug auf unterschiedliche Ausführungsformen von Verfahren einerseits und von Vorrichtungen andererseits beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1a und 1b zeigen Darstellungen einer Vorrichtung gemäss einem Ausführungsbeispiel;

Fig. 2 zeigt eine Darstellung eines Kalibrierens eines Lastsensors gemäss einem Ausführungsbeispiel.

Die Figuren sind lediglich schematisch und nicht massstabsgetreu. Gleiche Bezugszeichen bezeichnen gleiche oder gleichwirkende Merkmale.

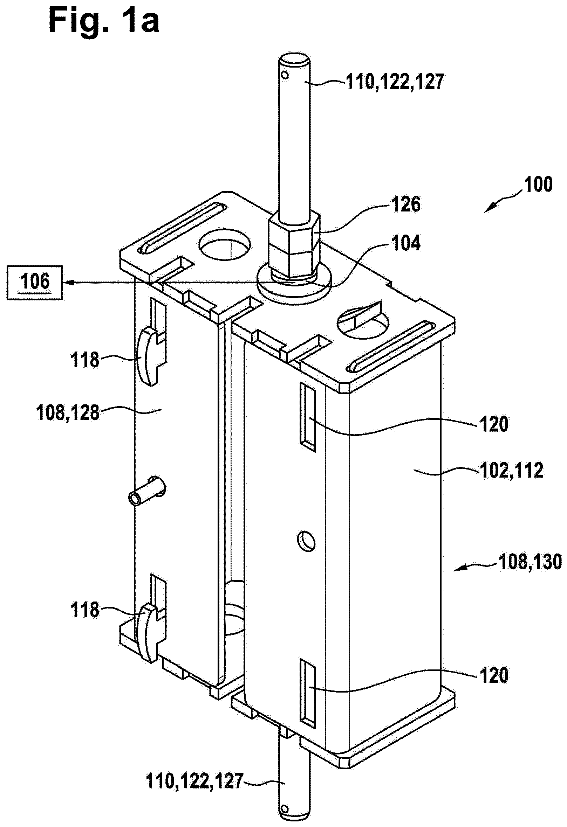

Fig. 1a zeigt eine Darstellung eine Vorrichtung 100 gemäss einem Ausführungsbeispiel.

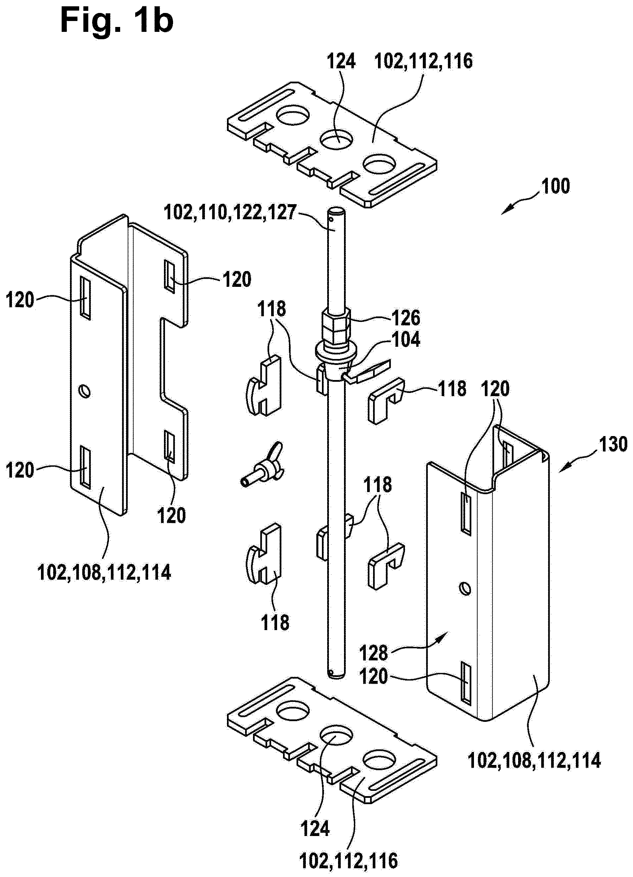

Fig. 1b zeigt eine Explosionsdarstellung der Vorrichtung 100.

Die Vorrichtung 100 weist eine Blockiereinrichtung 102 und eine Messeinrichtung 104 auf. Die Blockiereinrichtung 102 ist dazu ausgebildet, mechanisch mit einem Schienensystem einer Aufzuganlage verbunden zu werden und eine an dem Schienensystem beweglich gelagerte Komponente der Aufzuganlage, eine Kabine und ein Gegengewicht, an dem Schienensystem abzustützen oder an dem Schienensystem zu befestigen und eine Kraft von der beweglichen Komponente in das Schienensystem abzuleiten. Die Messeinrichtung 104 ist dazu ausgebildet, die von der beweglichen Komponente über die Blockiereinrichtung 102 in das Schienensystem abgeleitete Kraft in einem Kraftwert 106 abzubilden.

Die Blockiereinrichtung 102 weist zumindest eine Schienenschnittstelle 108 zum Verbinden mit dem Schienensystem und zumindest eine Komponentenschnittstelle 110 zum Verbinden mit der Komponente auf. Die Messeinrichtung 104 ist zwischen der Schienenschnittstelle 108 und der Komponentenschnittstelle 110 angeordnet.

Die Vorrichtung 100 weist ein aus Stanzbiegeteilen zusammengesetztes, im Wesentlichen quaderförmiges Gehäuse 112 auf. Das Gehäuse 112 weist zwei Seitenteile 114 und zwei Deckel 116 auf. Die Seitenteile 114 sind U-förmig gebogen und sind an gegenüberliegenden Stirnseiten mit jeweils einem der Deckel 116 verbunden. Die Seitenteile 114 und die Deckel 116 umschliessen einen Innenraum der Vorrichtung 100. Die Seitenteile 114 und die Deckel 116 sind aus Metall.

Die Schienenschnittstelle 108 weist Haken 118 zum Einhängen in entsprechende Aussparungen des Schienensystems auf. Die Haken 118 sind als Stanzteile aus einem Plattenmaterial ausgeführt. Die Haken 118 sind ebenfalls aus einem Metall. Die Haken 118 stehen aus Schlitzen 120 in den Seitenteilen 114 hervor und können in entsprechende längliche Aussparungen des Schienensystems eingeführt werden. Nach dem Einführen können die Haken 118 entlang der Aussparung bewegt werden, bis sie eine Kante der jeweiligen Aussparung des Schienensystems umgreifen und die Vorrichtung 100 an der Kante fixieren.

Die Komponentenschnittstelle 110 weist eine Gewindestange 122 auf. Die Gewindestange 122 ist aus einem Metall. Die Gewindestange 122 verläuft durch den Innenraum und durch je ein Loch 124 pro Deckel 116. Auf die Gewindestange 122 sind zumindest zwei Muttern 126 aufgeschraubt. Durch die Muttern 126 ist die Gewindestange 122 auf zumindest einem der Deckel 116 abgestützt. Eine Länge der aus dem Gehäuse 112 hervorstehenden Gewindestange 122 kann variiert werden. Je nach Anwendungsfall können unterschiedliche Längen der Gewindestange 122 eingestellt werden.

Die Messeinrichtung 104 ist auf der Gewindestange 122 zwischen den Muttern 126 und dem Deckel 116 angeordnet.

Die Länge der Gewindestange 122 kann auch verändert werden, nachdem die Komponente an der Vorrichtung 100 angeordnet ist. Dann kann die Gewindestange 122 als Schraubvorrichtung 127 bezeichnet werden. Die Komponente kann durch das Verändern der Länge um eine bestimmte Strecke bewegt werden. Während die Komponente bewegt wird, wird auch eine Zugkraft oder Druckkraft auf die Komponente ausgeübt, die von der Messeinrichtung 104 in dem Kraftwert 106 abgebildet werden kann.

Alternativ oder ergänzend kann die Gewindestange 122 auch in ein Gewinde der Komponente eingeschraubt werden. Bei Verwendung als Schraubvorrichtung 127 kann die Gewindestange 122 in dem Gewinde der Komponente gedreht werden, um die Komponente um die Strecke zu bewegen und die Kraft auf die Komponente auszuüben.

In einem Ausführungsbeispiel weist die Blockiereinrichtung 102 zwei Schienenschnittstellen 108 auf. Die beiden Schienenschnittstellen 108 sind an entgegengesetzten Seiten des Gehäuses 112 angeordnet. Eine Schienenschnittstelle 108 ist als Kabinenseite 128 ausgebildet. Die andere Schienenschnittstelle 108 ist als Gegengewichtseite 130 ausgebildet. Wenn die Kabinenseite 128 mit dem Schienensystem verbunden ist, kann die Komponentenschnittstelle 110 mit der Kabine der Aufzuganlage verbunden werden. Wenn die Gegengewichtseite 130 mit dem Schienensystem verbunden ist, kann die Komponentenschnittstelle 110 mit dem Gegengewicht der Aufzuganlage verbunden werden.

In einem Ausführungsbeispiel sind die Haken 118 auf der Kabinenseite 128 als symmetrische Doppelhaken ausgeführt. Die Doppelhaken können somit aus entgegengesetzten Richtungen auf die Blockiereinrichtung 102 einwirkende Kräfte in das Schienensystem ableiten.

In einem Ausführungsbeispiel (nicht gezeigt) weist die Vorrichtung 100 eine Schnittstelle zur kommunikationstechnischen Verbindung der Vorrichtung 100 mit einer Aufzugssteuerung auf. Diese Schnittstelle kann beispielsweise als wireless-Verbindung oder als eine Kabelverbindung ausgeführt sein. In einem anderen Ausführungsbeispiel weist die Vorrichtung 100 ein Display / eine Anzeige zur Darstellung der durch die Messeinrichtung 104 gemessenen Messwerten auf. In einer weiteren alternativen Ausführungsform werden die gemessenen Messwerte zur Darstellung wireless an eine Anzeigeeinheit übermittelt. Die Anzeigeeinheit kann dabei durch ein Smartphone ausgebildet sein.

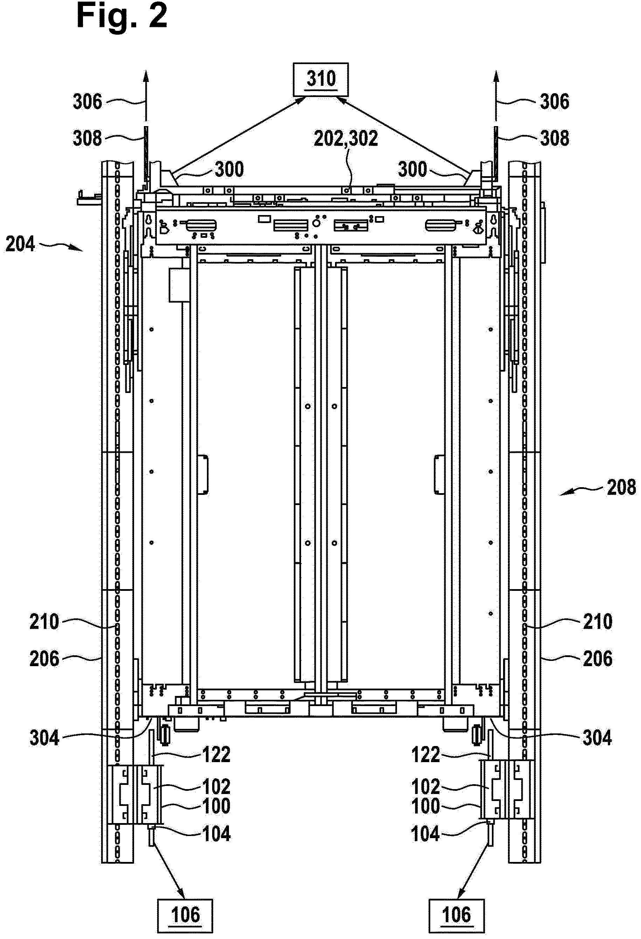

Fig. 2 zeigt eine Darstellung eines Kalibrierens zumindest eines Lastsensors 300 gemäss einem Ausführungsbeispiel. Das Kalibrieren erfolgt unter Verwendung einer Vorrichtung 100 nach dem hier vorgestellten Ansatz. Die Vorrichtung 100 entspricht im Wesentlichen der Vorrichtung in Fig. 1. Das Kalibrieren ist hier an zwei Lastsensoren 300 einer Kabine 302 als die bewegliche Komponente 202 der Aufzuganlage 204 dargestellt. Der Lastsensor 300 ist in einem anderen Ausführungsbeispiel (nicht gezeigt) doppelt je an jeweils jeder von zwei Kabinenbremsen ausgeführt. In diesem Ausführungsbeispiel ist der Lastsensor 300 an der Aufhängung der Kabinenbremse ausgeführt.

Für das Kalibrieren ist die Blockiereinrichtung 102 zumindest einer Vorrichtung 100 mit der Schiene 206 des Schienensystems 208 der Aufzuganlage 204 mechanisch verbunden. Dazu sind die Haken der Kabinenseite der Schienenschnittstelle der Blockiereinrichtung 102 in Aussparungen 210 der Schiene 206 eingehängt. Die Blockiereinrichtung 102 blockiert damit einen Verfahrweg der Kabine 302 entlang der Schiene 206. Die Messeinrichtung 104 ist an einer Unterseite der Vorrichtung 100 angeordnet. Hier sind zwei Vorrichtungen 100 auf gleicher Höhe mit zwei Schienen 206 des Schienensystems 208 verbunden, da die Kabine 302 durch beide Schienen 206 vertikal geführt wird und so ein Verkanten der Kabine 302 vermieden werden kann. In einem anderen Ausführungsbeispiel (nicht gezeigt) ist nur die eine Vorrichtung 100 vorhanden.

Zum Messen wird die Kabine 302 von der Antriebseinrichtung an die Vorrichtungen 100 herangefahren und die Gewindestangen 122 der Komponentenschnittstellen 110 von unten in je ein Gewinde 304 der Kabine 302 eingeschraubt. Die Kabine 302 ist nun mechanisch mit den Vorrichtungen 100 verbunden.

Dann erhöht die Antriebseinrichtung eine Zugkraft 306 in dem zumindest einen Tragmittel 308. Alternativ kann durch weiteres Anziehen der Gewindestangen 122 in den Gewinden 304 und/oder durch Anziehen der Muttern die Zugkraft 306 erhöht werden. Dadurch wird die Vorrichtungen 100 angehoben, bis die Doppelhaken der Kabinenseiten der Schienenschnittstellen in den Aussparungen 210 der Schiene 206 nach oben gerutscht sind und die Oberkanten der Aussparungen 210 umgreifen. Jetzt können die Schienenschnittstellen Zugkräfte in die Schienen 206 einleiten.

Die Zugkraft 306 wird erhöht, bis ein vorbestimmter Wert erreicht ist. Die Lastsensoren 300 bilden diese Zugkraft in je einem Lastwert 310 ab. Auch die Messeinrichtungen 104 bilden die anteilig von den Blockiereinrichtungen 102 in die Schienen 206 übertragenen Kräfte in Kraftwerten 106 ab.

Die Kraftwerte 106 werden addiert und mit den Lastwerten 310 verglichen. Wenn eine Summe der Lastwerte 310 von der Summe der Kraftwerte 106 abweicht, wird eine Kalibrierung der Lastsensoren 300 entsprechend angepasst.

In einem Ausführungsbeispiel wird die Zugkraft 306 anschliessend weiter erhöht.

Beispielsweise kann die Zugkraft 306 auf 125% eines während des Betriebs der Aufzuganlage 204 normalen Werts erhöht werden. Die Lastsensoren 300 und die Messeinrichtungen 104 bilden auch die erhöhte Zugkraft in Messwerten ab, die wieder miteinander verglichen werden. Wenn die Lastwerte 310 der kalibrierten Lastsensoren 300 innerhalb eines Toleranzbereichs um die Kraftwerte 106 sind, ist das Kalibrieren abgeschlossen. Wenn einer der Lastwerte ausserhalb des Toleranzbereichs liegt, kann beispielsweise ein Vergrösserungsfaktor des Lastsensors 300 angepasst werden. Der Toleranzbereich kann beispielsweise 15 Prozent betragen.

Alternativ ist es möglich, dass der Aufzugsteuerung die durch die Messeinrichtung 104 ermittelten Kraftwerte mitgeteilt (durch mit der Aufzugssteuerung verbundene Vorrichtung(en) oder durch Eingaben der von der Vorrichtung 100 abgelesenen Messwerte in die Aufzugssteuerung) werden, wobei die zwei Messpunkte (erste Zugkraft, zweite Zugkraft) so mit den dazugehörigen Lastsensorsignalen verknüpft beziehungsweise diesen zugeordnet werden. Wird eine geeichte Vorrichtung verwendet, kann der Lastsensor 300 beziehungsweise die Lastsensoren 300 so kalibriert werden.

Nach dem Kalibrieren wird die Zugkraft 306 wieder reduziert, bis die Doppelhaken wieder in den Aussparungen 210 herabgerutscht sind und die Vorrichtungen 100 wieder vor dem Herabfallen gesichert sind. Dann werden die Gewindestangen 122 aus den Gewinden 304 geschraubt und die Vorrichtungen 100 vom Schienensystem 208 abgenommen.

Die Messeinrichtung kann auch aus der Vorrichtung entfernt werden und die Blockiereinrichtung ohne die Messeinrichtung als Sicherheitseinrichtung zum Fixieren einer der beweglichen Komponenten verwendet werden. So können beispielsweise gefahrlos Wartungsarbeiten an der Aufzuganlage durchgeführt werden.

Abschliessend ist darauf hinzuweisen, dass Begriffe wie "aufweisend", "umfassend", etc. keine anderen Elemente oder Schritte ausschliessen und Begriffe wie "eine" oder "ein" keine Vielzahl ausschliessen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung (100) für eine Aufzuganlage (204), wobei die Vorrichtung (100) eine Blockiereinrichtung (102) und eine Messeinrichtung (104) aufweist, wobei die Blockiereinrichtung (102) dazu ausgebildet ist, ein Gegengewicht und/oder eine Kabine der Aufzuganlage (204) mit einem Schienensystem (208) der Aufzuganlage (204) zu verbinden und/oder an dem Schienensystem (208) abzustützen, wobei die Messeinrichtung (104) dazu ausgebildet ist, eine vom Gegengewicht und/oder Kabine in das Schienensystem (208) abgeleitete Kraft in einem Kraftwert (106) abzubilden, **dadurch gekennzeichnet, dass** die Blockiereinrichtung (102) zum Verbinden mit dem Schienensystem (208) eine Kabinenseite (128) und eine Gegengewichtseite (130) aufweist, wobei die Messeinrichtung (104) an einer Kabine (302) der Aufzuganlage (204) verwendbar ist, wenn die Kabinenseite (128) mit dem Schienensystem (208) verbunden ist oder die Messeinrichtung (104) an einem Gegengewicht (200) der Aufzuganlage (204) verwendbar ist, wenn die Gegengewichtseite (130) mit dem Schienensystem (208) verbunden ist.

2. Vorrichtung (100) nach Anspruch 1, wobei die Blockiereinrichtung (102) zumindest einen Haken (118) zum Einhängen in eine entsprechende Aussparung (210) des Schienensystems (208) aufweist.

3. Vorrichtung (100) nach Anspruch 2, wobei der Haken (118) symmetrisch ausgeführt ist und in entgegengesetzten Orientierungen in die Aussparung (210) einhängbar ist.

4. Vorrichtung (100) nach einem der vorangehenden Ansprüchen, wobei die Messeinrichtung (104) so ausgebildet ist, dass der Kraftwert in Form eines Signals an eine Aufzugssteuerung der Aufzugsanlage (204) übermittelbar ist.

5. Vorrichtung (100) nach einem der vorangehenden Ansprüchen, wobei die Vorrichtung (100) weiter eine Anzeige zur Darstellung der durch die Messeinrichtung (104) gemessen Kraftwerte aufweist.

6. Vorrichtung (100) nach einem der vorangehenden Ansprüche, wobei die Vorrichtung (100) durch eine Schraubvorrichtung (127) mit dem Gegengewicht (200) und/oder der Kabine (302) verbindbar ist.

7. Vorrichtung (100) nach einem der vorangehenden Ansprüchen, wobei die Vorrichtung (100) eine Schraubvorrichtung (127) umfasst, mit welcher im montierten Zustand eine über Tragmittel (308) auf das wenigstens eine Gegengewicht (200) und/oder die Kabine (302) übertragene Zugkraft (306) veränderbar ist.

8. Vorrichtung (100) nach Anspruch 6 oder 7, wobei die Schraubvorrichtung (127) ein Gewinde , bevorzugt eine Gewindestange (122), aufweist, über das das Gegengewicht (200) und/oder die Kabine (302) um eine definierte Strecke bewegt werden kann, um die Zugkraft (306) zu verändern, wobei bevorzugt das Gegengewicht (200) und/oder die Kabine (302) über die Schraubvorrichtung angehoben werden, um die Zugkraft (306) zu verringern, wobei bevorzugt das Gegengewicht (200) und/oder die Kabine (302) durch die Schraubvorrichtung nach unten gedrückt oder nach unten gezogen werden, um die Zugkraft (306) zu erhöhen.

9. Verfahren zum Messen einer Kraft an wenigstens einem Gegengewicht und/oder einer Kabine einer Aufzugsanlage (204),
wobei die Aufzugsanlage (204) eine Aufzugssteuerung, wenigstens eine Schiene (206) und wenigstens ein Gegengewicht (200) und eine Kabine (302) aufweist, wobei das wenigstens eine Gegengewicht (200) über wenigstens ein Tragmittel (308) mit der Kabine (302) verbunden ist umfassend die Schritte:
- Verbinden wenigstens einer Vorrichtung (100) nach Anspruch 1 bis 8 mit der wenigstens einen Schiene (206);
- Aufsetzen des wenigstens einen Gegengewichts (200) und/oder der Kabine (302) auf die wenigstens eine Vorrichtung (100);
- Verändern einer über Tragmittel (308) auf das wenigstens eine Gegengewicht (200) und/oder die Kabine (302) übertragene Zugkraft (306);
- Erfassen eines Kraftwerts anhand einer über die Vorrichtung (100) in die wenigstens eine Schiene (206) abgeleiteten Kraft.

10. Verfahren nach Anspruch 9, wobei die Zugkraft (306) unter Verwendung einer Schraubvorrichtung (127) der Vorrichtung (100) verändert wird.

11. Verfahren nach einem der Ansprüche 9 oder 10, wobei die Zugkraft (306) unter Verwendung einer Antriebseinrichtung der Aufzuganlage (204) verändert wird und/oderwobei das wenigstens eine Gegengewicht (200) und/oder die Kabine (302) mit der Vorrichtung (100) mechanisch verbunden wird und/oderwobei die Zugkraft so vergrössert wird, dass sie grösser als eine Nominallast der Aufzuganlage (204) ist, wobei die Zugkraft (306) insbesondere so vergrössert wird, dass sie grösser als 120% der Nominallast der Aufzuganlage (204) ist.

12. Verfahren nach einem der Ansprüche 9 bis 11, wobei in einem weiteren Schritt ein Lastsensors (300) der Aufzuganlage (204) kalibriert wird, wobei dazu ein Kraftwert (106) unter Verwendung eines Verfahrens gemäss einem der Ansprüche 10 bis 13 erfasst wird, wobei die veränderte Zugkraft (306) unter Verwendung des Lastsensors (300) in einem Lastwert (310) abgebildet wird, wobei ein Vergleich zwischen dem Lastwert (310) und dem Kraftwert (106) durchgeführt wird und der Lastsensor (300) unter Verwendung eines Ergebnisses des Vergleichs kalibriert wird und/oder, wobei unter Verwendung des Lastsensors (300) die Zugkraft (306) des Tragmittels (308) bei frei am Tragmittel (308) hängender Komponente (202) in einem Referenzwert abgebildet wird und der Vergleich ferner unter Verwendung des Referenzwerts durchgeführt wird.

13. Verfahren nach Anspruch 12, wobei die Zugkraft (306) zumindest ein weiteres Mal verändert wird und zumindest ein weiterer Messwert des Lastsensors (300) und/oder der Vorrichtung (100) erfasst wird, wobei der Vergleich ferner unter Verwendung des weiteren Messwerts durchgeführt wird.

## Claims

1. A device (100) for an elevator system (204), wherein the device (100) has a blocking arrangement (102) and a measuring arrangement (104), wherein the blocking arrangement (102) is configured to connect a counterweight and/or a car of the elevator system (204) to a rail system (208) of the elevator system (204) and/or to support it on the rail system (208), wherein the measuring arrangement (104) is configured to map a force transferred from the counterweight and/or car into the rail system (208) as a force value (106),
**characterized in that**, the blocking arrangement (102) has a car side (128) and a counterweight side (130) for connecting to the rail system (208), wherein the measuring arrangement (104) is configured to be used on a car (302) of the elevator system (204) when the car side (128) is connected to the rail system (208), or the measuring arrangement (104) is configured to be used on a counterweight (200) of the elevator system (204) when the counterweight side (130) is connected to the rail system (208).

2. The device (100) according to claim 1, wherein the blocking arrangement (102) comprises at least one hook (118) to be inserted into a corresponding recess (210) in the rail system (208).

3. The device (100) according to claim 2, wherein the hook (118) is designed to be symmetrical and is configured to be inserted into the recess (210) in opposite orientations.

4. The device (100) according to any of the preceding claims, wherein the measuring arrangement (104) is configured such that the force value is transmittable in the form of a signal to an elevator controller of the elevator system (204).

5. The device (100) according to any of the preceding claims, wherein the device (100) further comprises a display for showing the force values measured by the measuring arrangement (104).

6. The device (100) according to any of the preceding claims, wherein the device (100) is configured to be connected to the counterweight (200) and/or car (302) by means of a screwing device (127).

7. The device (100) according to any of the preceding claims, wherein the device (100) comprises a screwing device (127) with which a tensile force (306) transmitted to the at least one counterweight (200) and/or the car (302) via suspension means (308) is modifiable in the mounted state.

8. The device (100) according to claim 6 or 7, wherein the screwing device (127) has a thread, preferably a threaded rod (122), via which the counterweight (200) and/or car (302) is movable a defined distance in order to change the tensile force (306), wherein preferably the counterweight (200) and/or car (302) are lifted via the screwing device in order to reduce the tensile force (306), wherein preferably the counterweight (200) and/or car (302) are pushed downward or pulled downward by the screwing device in order to increase the tensile force (306).

9. A method for measuring a force acting on at least one counterweight and/or a car of an elevator system (204),
wherein the elevator system (204) comprises an elevator controller, at least one rail (206) and at least one counterweight (200) and a car (302), wherein the at least one counterweight (200) is connected to the car (302) via at least one suspension means (308), the method comprising the steps of:
- connecting at least one device (100) according to claims 1 to 8 to the at least one rail (206);
- placing the at least one counterweight (200) and/or the car (302) onto the at least one device (100);
- changing a tensile force (306) transmitted to the at least one counterweight (200) and/or the car (302) via suspension means (308);
- recording a force value on the basis of a force transferred to the at least one rail (206) via the device (100).

10. The method according to claim 9, wherein the tensile force (306) is changed by using a screwing device (127) of the device (100).

11. The method according to any of claims 9 or 10, wherein the tensile force (306) is changed using a drive unit of the elevator system (204), and/or wherein the at least one counterweight (200) and/or the car (302) is mechanically connected to the device (100), and/or wherein the tensile force is increased such as to be greater than a nominal load of the elevator system (204), wherein the tensile force (306) is, in particular, increased such as to be greater than 120% of the nominal load of the elevator system (204).

12. The method according to any of claims 9 to 11, wherein, in a further step, a load sensor (300) of the elevator system (204) is calibrated, wherein for this purpose a force value (106) is recorded using a method according to any of claims 10 to 12, wherein the changed tensile force (306) is mapped as a load value (310) using the load sensor (300), wherein a comparison is made between the load value (310) and the force value (106) and the load sensor (300) is calibrated using a result of the comparison, and/or wherein, using the load sensor (300), the tensile force (306) of the suspension means (308) is mapped as a reference value when the component (202) is freely suspended from the suspension means (308), and the comparison is further performed using the reference value.

13. The method according to claim 12, wherein the tensile force (306) is changed at least one more time and at least one further measured value of the load sensor (300) and/or of the device (100) is recorded, wherein the comparison is further performed using the further measured value.

## Revendications

1. Dispositif (100) destiné à une installation d'ascenseur (204), le dispositif (100) comportant un dispositif de blocage (102) et un dispositif de mesure (104), le dispositif de blocage (102) étant conçu pour relier un contrepoids et/ou une cabine de l'installation d'ascenseur (204) à un système de rails (208) de l'ascenseur (204) et/ou de l'appuyer contre ce système de rails (208), le dispositif de mesure (104) étant conçu pourreprésenter,sous la forme d'une valeur de force (106),une force transmise par le contrepoids et/ou la cabine au système de rails (208),
**caractérisé en ce que** que le dispositif de blocage (102) comporte, pour la liaison avec le système de rails (208), un côté cabine (128) et un côté contrepoids (130), le dispositif de mesure (104) pouvant être utilisé sur une cabine (302) de l'installation d'ascenseur (204) lorsque le côté cabine (128) est relié au système de rails (208), ou que le dispositif de mesure (104) peut être utilisé sur un contrepoids (200) de l'installation d'ascenseur (204) lorsque le côté contrepoids (130) est relié au système de rails (208).

2. Dispositif (100) selon la revendication 1, dans lequel le dispositif de blocage (102) comporte au moins un crochet (118) destiné à s'accrocher dans un évidement correspondant (210) du système de rails (208).

3. Dispositif (100) selon la revendication 2, dans lequel le crochet (118) est de conception symétrique et peut s'accrocher dans l'évidement (210) selon des orientations opposées.

4. Dispositif (100) selon l'une des revendications précédentes, dans lequel le dispositif de mesure (104) est conçu de telle sorte que la valeur de la force puisse être transmise sous forme d'un signal à une commande d'ascenseur de l'installation d'ascenseur (204).

5. Dispositif (100) selon l'une des revendications précédentes, le dispositif (100)comportant en outre un affichage destiné à représenter les valeurs de force mesurées par le dispositif de mesure (104).

6. Dispositif (100) selon l'une des revendications précédentes, dans lequel le dispositif (100) peut être relié au contrepoids (200) et/ou à la cabine (302) au moyen d'un dispositif à vis (127).

7. Dispositif (100) selon l'une des revendications précédentes, le dispositif (100) comprenant un dispositif à vis (127) permettant, à l'état monté, de modifier une force de traction (306) transmise par l'intermédiaire de moyens de support (308) à au moins un contrepoids (200) et/ou à la cabine (302).

8. Dispositif (100) selon la revendication 6 ou 7, dans lequel le dispositif à vis (127) comporte un filetage, de préférence une tige filetée (122), grâce à laquelle le contrepoids (200) et/ou la cabine (302) peuvent être déplacés d'une distance définie afin de modifier la force de traction (306), le contrepoids (200) et/ou la cabine (302) sont soulevés par le dispositif à vis afin de réduire la force de traction (306), le contrepoids (200) et/ou la cabine (302) étant de préférence poussés vers le bas ou tirés vers le bas par le dispositif à vis afin d'augmenter la force de traction (306).

9. Procédé permettant de mesurer une force sur au moins un contrepoids et/ou une cabine d'une installation d'ascenseur (204),
l'ascenseur (204) comportant une commande d'ascenseur, au moins un rail (206) ainsi qu'au moins un contrepoids (200) et une cabine (302), ledit au moins un contrepoids (200) étant relié à la cabine (302) par l'intermédiaire d'au moins un moyen de support (308), comprenant les étapes suivantes :
- la liaison d'au moins un dispositif (100) selon les revendications 1 à 8 à ladite au moins une rail (206) ;
- la mise en place dudit au moins un contrepoids (200) et/ou de ladite cabine (302) sur ledit au moins un dispositif (100) ;
- la modification d'une force de traction (306) transmise via des moyens de support (308) sur à au moins un contrepoids (200) et/ou à la cabine (302) ;
- l'acquisition d'une valeur de force à partir d'une force transmise par le dispositif (100) dans le au moins un rail (206).

10. Procédé selon la revendication 9, dans lequel la force de traction (306) est modifiée à l'aide d'un dispositif de vissage (127) du dispositif (100).

11. Procédé selon l'une des revendications 9 ou 10, dans lequel la force de traction (306) est modifiée à l'aide d'un dispositif d'entraînement de l'installation d'ascenseur (204) et/ou dans lequel l' est relié mécaniquement à au moins un contrepoids (200) et/ou à la cabine (302) est reliée mécaniquement au dispositif (100) et/ou dans lequel la force de traction est augmentée de telle sorte qu'elle soit supérieure à une charge nominale de l'installation d'ascenseur (204), la force de traction (306) étant notamment augmentée de telle sorte qu'elle soit supérieure à 120 % de la charge nominale de l'installation d'ascenseur (204).

12. Procédé selon l'une des revendications 9 à 11, dans lequel, dans une étape supplémentaire, un capteur de charge (300) de l'installation d'ascenseur (204) est étalonné, une valeur de force (106) étant à cet effet enregistrée à l'aide d'un procédé selon l'une des revendications 10 à 13, la force de traction modifiée (306) est représentée par une valeur de charge (310) à l'aide du capteur de charge (300), une comparaison étant effectuée entre la valeur de charge (310) et la valeur de force (106), et le capteur de charge (300) est étalonné à l'aide d'un résultat de la comparaison et/ou, la force de traction (306) du moyen de suspension (308) étant représentée par une valeur de référence à l'aide du capteur de charge (300) lorsque le composant (202) est suspendu librement au moyen de suspension (308), et la comparaison étant en outre effectuée à l'aide de la valeur de référence.

13. Procédé selon la revendication 12, dans lequel la force de traction (306) est modifiée au moins une fois de plus et au moins une autre valeur de mesure du capteur de charge (300) et/ou du dispositif (100) est enregistrée, la comparaison étant en outre effectuée à l'aide de cette autre valeur de mesure.
